# EUROPEAN PATENT APPLICATION

(11) **EP 2 104 045 A2**
(43) Date of publication of application: **23.09.2009**
(21) Application number: 09164519.2
(22) Date of filing: 27.03.2007
(51) Int. Cl.: G06F 17/30

(54) **Methods and apparatus for transferring content from a storage system**

(30) Priority: 28.03.2006 US 392969; 28.03.2006 US 392981
(62) Divisional of application: 07754104.3
(71) Applicant: EMC Corporation, Hopkinton, MA 01748 (US)
(72) Inventor: Keithley , Kaleb, Belmont, MA 02478-1003 (US); Cakekjic Zoran, Watertown, MA 02472 (US); Kilian Michael, Harvard, MA 01451 (US); Todd , Stephen J., Shrewsbury, MA 01545 (US)
(74) Representative: Driver, Virginia Rozanne

(57) **Abstract**

At least one storage system storing a plurality of content units, the at least one storage system comprising an input, and at least one controller, coupled to the input, that while processing a request, received via the input, to provide from the at least one storage system to at least one first destination each of the plurality of content units that meet at least one selection criterion, wherein the plurality of content units that satisfy the at least one selection criterion comprise a first group of content units, receives, via the input, at least one instruction to begin providing those content units in the first group of content units not already provided to the at lease one first destination to at least one second destination, wherein the at least one first destination differs from the at least one second destination, and in response to receipt of the at least one instruction, provides those content units in the first group of content units not already provided to the at least one first destination to the at least one second destination.

## Description

### Field of the Invention

The present invention relates to the transfer of content from storage systems.

### Description of the Related Art

Virtually all computer application programs rely on storage that may be used to store computer code and data manipulated by the computer code. A typical computer system includes one or more host computers that execute such application programs and one or more storage systems that provide storage.

The host computers may access data by sending access requests to the one or more storage systems. Some storage systems require that the access requests identify units of data to be accessed using logical volume and block addresses. Such storage systems are known as "block I/O" storage systems. Although the logical volumes presented by the storage system to the host may not map in a one-to-one manner to physical storage devices, they are perceived by the host as corresponding to physical storage devices, and the specification of a logical volume and block address indicates where the referenced data is physically stored within the storage system.

In contrast to block I/O storage systems, some storage systems receive and process access requests that identify a data or other content unit using an object identifier, rather than an address that specifies where the data unit is physically or logically stored in the storage system. Such storage systems are referred to as object addressable storage (OAS) systems. In object addressable storage, a content unit may be identified (e.g., by host computers requesting access to the content unit) using its object identifier and the object identifier may be independent of the physical or logical location at which the content unit is stored (although it is not required to be). However, from the perspective of the host computer (or user) accessing a content unit on an OAS system, the object identifier does not control where the content unit is stored. Thus, in an OAS system, if the physical or logical location at which the unit of content is stored changes, the identifier by which host computers access the unit of content may remain the same. In contrast, in a block I/O storage system, if the physical or logical location at which the unit of content is stored changes, host computers accessing the unit of content typically must be made aware of the location change and then use the new physical or logical location of the unit of content for future accesses.

One example of an OAS system is a content addressable storage (CAS) system. In a CAS system, the object identifiers that identify content units are content addresses. A content address is an identifier that is computed, at least in part, from at least a portion of the content of its corresponding unit of content, which can be data and/or metadata. For example, a content address for a unit of content may be computed by hashing the unit of content and using the resulting hash value as the content address. Storage systems that identify content by a content address are termed content addressable storage (CAS) systems.

### Summary of the Invention

One embodiment is directed to a method for use in a computer system comprising at least one storage system storing a plurality of content units. The method comprises acts of: (A) receiving, at the at least one storage system, a request providing at least one selection criterion; and (B) in response to receiving the request, providing from the at least one storage system each of the plurality of content units that meets the at least one selection criterion. Another embodiment is directed to at least one computer readable medium encoded with instructions that, when executed on a computer system, perform the above-described method.

A further embodiment is directed to at least one storage system that stores a plurality of content units. The at least one storage system comprises: an input; and at least one controller, coupled to the input, that: receives, via the input, a request providing at least one selection criterion; and in response to receiving the request, provides each of the plurality of content units that meets the at least one selection criterion.

Another embodiment is directed to a method for use in a computer system comprising at least one storage system storing a plurality of content units. The method comprises: (A) issuing a request to the at least one storage system requesting that the at least one storage system provide each of the plurality of content units that meets at least one selection criterion provided in the request. A further embodiment is directed to at least one computer readable medium encoded with instructions that, when executed on a computer system, perform the above-described method.

Another embodiment is directed to a host computer comprising: an output; and at least one controller, coupled to the output, that: issues a request, via the output, to at least one storage system that stores a plurality of content units, requesting that the at least one storage system provide each of the plurality of content units that meets at least one selection criterion provided in the request.

A further embodiment is directed to a method for use in a computer system comprising at least one storage system storing a plurality of content units. The method comprises acts of: (A) while processing a request, received at the at least one storage system, to provide from the at least one storage system to at least one first destination each of the plurality of content units that meet at least one selection criterion, wherein the plurality of content units that satisfy the at least one selection criterion comprise a first group of content units, receiving at least one instruction to begin providing those content units in the first group of content units not already provided to the at least one first destination to at least one second destination, wherein the at least one first destination differs from the at least one second destination; and (B) in response to receipt of the at least one instruction, providing those content units in the first group of content units not already provided to the at least one first destination to the at least one second destination. Another embodiment is directed to at least one computer readable medium encoded with instructions that, when executed on a computer system, perform the above-described method.

A further embodiment is directed to at least one storage system storing a plurality of content units. The at least one storage system comprises: an input; and at least one controller, coupled to the input, that: while processing a request, received via the input, to provide from the at least one storage system to at least one first destination each of the plurality of content units that meet at least one selection criterion, wherein the plurality of content units that satisfy the at least one selection criterion comprise a first group of content units, receives, via the input, at least one instruction to begin providing those content units in the first group of content units not already provided to the at least one first destination to at least one second destination, wherein the at least one first destination differs from the at least one second destination; and in response to receipt of the at least one instruction, provides those content units in the first group of content units not already provided to the at least one first destination to the at least one second destination.

Another embodiment is directed to a method of processing content units in a computer system comprising at least one storage system storing a plurality of content units and a plurality of servers that can be programmed to process content units. The method comprises acts of: (A) issuing a request to the at least one storage system to push from the at least one storage system to a first group of servers from among the plurality of servers each of the plurality of content units that meet at least one selection criterion, wherein the plurality of content units that satisfy the at least one selection criterion comprise a first group of content units; (B) processing, in the first group of servers, a first subset of the first group of content units received at the first group of servers; (C) after the at least one storage system has begun pushing some of the first group of content units to the first group of servers, issuing a request to the at least one storage system to begin pushing content units in the first group of content units not already pushed to the first group of severs to a second group of servers, from among the plurality of servers, that differs from the first group of servers; and (D) processing, in the second group of servers, a second subset of the first group of content units received at the second group of the plurality of servers. A further embodiment is directed to at least one computer readable medium encoded with instructions that, when executed on a computer system, perform the above-described method.

Another embodiment is directed to a computer system comprising: at least one storage system storing a plurality of content units; a plurality of servers that can be programmed to process content units; a communications network that couples each of the plurality of servers to the at least one storage system; and at least one controller that: issues a request to the at least one storage system to push from the at least one storage system to a first group of servers from among the plurality of servers each of the plurality of content units that meet at least one selection criterion, wherein the plurality of content units that satisfy the at least one selection criterion comprise a first group of content units; processes, in the first group of servers, a first subset of the first group of content units received at the first group of servers; after the at least one storage system has begun pushing some of the first group of content units to the first group of servers, issues a request to the at least one storage system to begin pushing content units in the first group of content units not already pushed to the first group of severs to a second group of servers, from among the plurality of servers, that differs from the first group of servers; and processes, in the second group of servers, a second subset of the first group of content units received at the second group of the plurality of servers.

A further embodiment is directed to a method for use in a computer system comprising at least one storage system storing a plurality of content units, the at least one storage system providing an interface that enables each of the plurality of content units to be accessed via an object identifier. The method comprises acts of: (A) receiving, at the at least one storage system, a request to access at least one of the plurality of content units, wherein the request does not include the object identifier for the at least one content unit but includes at least one selection criterion; and (B) in response to receiving the request, using the at least one selection criterion to identify the at least one of the plurality of content units and to provide from the at least one storage system the at least one of the plurality of content units. Another embodiment is directed to at least one computer readable medium encoded with instructions that, when executed on a computer system, perform the above-described method.

Another embodiment is directed to at least one storage system storing a plurality of content units comprising: an interface that enables each of the plurality of content units to be accessed via an object identifier; and at least one controller, coupled to the interface, that: receives a request to access at least one of the plurality of content units, wherein the request does not include the object identifier for the at least one content unit but includes at least one selection criterion; and in response to receiving the request, uses the at least one selection criterion to identify the at least one of the plurality of content units and to provide from the at least one storage system the at least one of the plurality of content units.

A further embodiment is directed to a method for accessing at least one content unit stored on at least one storage system that stores a plurality of content units, the at least one storage system providing an interface that enables each of the plurality of content units to be accessed via an object identifier. The method comprises an act of:
(A) providing to the at least one storage system a request to access the at least one content unit, wherein the request does not include the object identifier for the at least one content unit but includes at least one selection criterion that enables the at least one storage system to identify the at least one content unit. Another embodiment is directed to at least one computer readable medium encoded with instructions that, when executed on a computer system, perform the above-described method.

A further embodiment is directed to a host computer comprising: an output through which the host computer is coupled to at least one storage system that stores a plurality of content units, the at least one storage system providing an interface that enables each of the plurality of content units to be accessed via an object identifier; and at least one controller that: provides, via the output, to the at least one storage system a request to access at least one content unit of the plurality of content units, wherein the request does not include the object identifier for the at least one content unit but includes at least one selection criterion that enables the at least one storage system to identify the at least one content unit.

### Brief Description of the Drawings

Figure 1 is a block diagram of a computer system in which multiple content units are transferred from a storage system in response to a request, in accordance with one embodiment of the invention;
Figure 2 is a flow chart depicting an illustrative process for transferring content units from a storage system, in accordance with one embodiment.
Figure 3 is a diagram of a content descriptor file (CDF) that references multiple blobs, wherein the CDF includes metadata pertaining to the referenced blobs, in accordance with some embodiments;
Figure 4 is a block diagram of a directory structure, organized based on object identifiers which can be employed on a host computer to which content can be transferred from a storage system, in accordance with some embodiments;
Figure 5 is a block diagram of a computer system wherein an application program executing on a host computer communicates with a storage system through an application programming interface (API), in accordance with some embodiments;
Figure 6 is a block diagram of a computer system in which multiple host computers may join an iteration created on a storage system to transfer content units from the storage system, in accordance with one embodiment;
Figure 7 is a flow chart depicting an illustrative process by which a host computer may join an iteration in progress on a storage system, in accordance with one embodiment; and
Figure 8 is a block diagram of a distributed storage system, on which embodiments of the invention may be implemented.

### Detailed Description

It is sometimes desirable to provide one or more content units from a storage system on which they are stored to another system, based on certain selection criteria, so that all of the content units that meet the selection criteria can identified. Using prior art OAS systems, accessing content units that meet a selection criterion involves a multistep process. Initially, the application program (e.g., executing on a host computer) issues a query to the OAS system requesting content units that meet the particular selection criterion. The OAS responds to the query by scanning its stored content units for those that the meet the selection criterion and returns a list of object identifiers to the application for the content units that do. The application program then uses the object identifiers to send individual access requests to the storage system for each of these content units, identifying each content unit by its object identifier. If there are a large number of content units that meet the selection criterion, many access requests have to be sent to retrieve each of these content units.

Some storage systems provide replication functionality, whereby large quantities of data stored on a storage system (i.e., a replication source) may be provided to another system (i.e., a replication target), e.g.; for fault tolerance or backup purposes. However, in such systems, volumes of storage on the storage system may be designated for replication and all of the data in a designated volume (or portions thereof that have changed since the last replication) is replicated, as such systems do no operate at the granularity of individual content units.

Applicants have appreciated that when requesting content units from a storage system, it may be desirable to divide the content units among several host computers that can share the processing thereof. For example, it may be desirable to process video data from an airport security camera stored in content units on an OAS system using a facial recognition algorithm to look for one or more individuals. Because of the volume of data to be processed, it may be desired to use multiple host computers to each process a portion of the video data in parallel. To accomplish this using a prior art OAS system, the search space must be partitioned prior to requesting the content units from the storage system. For example, if there are three host computers available to process the data and nine hours of video to be processed, it may be determined that each host computer is to process three hours of the video data. Then, a first processor may query the OAS for content units during a first three hour period, receive a first list of object identifiers that identify content units corresponding to the first three hours, and second and third processors may do the same for a second and third three hour period, respectively. Thus, in prior art OAS systems, decisions must be made ahead of time about how to allocate resources to the processing job and changes to the number of processors used in the processing job cannot be made dynamically.

Additionally, some prior art OAS systems may not be capable of filtering content units based on the desired search criteria. For example, a storage system that stores content units that include video data from multiple airport security cameras may store metadata that indicates which camera generated the video data in a particular content unit. This metadata may be stored in the same content unit as the video data or in a separate content unit that references the content unit storing the video data. It may be desired to process the video data that was generated by only one of the airport security cameras. Conventional OAS systems may not be capable of searching for content units based on the metadata associated with those contents. Thus, to identify the content units to be processed, each content unit including metadata that is stored on the storage system (or at least those stored on the storage system within a certain time range) must be individually retrieved from the storage system and its metadata searched to determine whether the content in the content unit (or in a content unit referenced by the content unit) includes video data from the desired security camera. Some conventional computer systems include search appliances that are disposed outside of an OAS system and that index content units stored on the OAS system based on their metadata or other search criteria, so that each content unit need not be searched every time a list of object identifiers of content units meeting certain search criteria is determined.

The above-discussed limitations of prior art storage systems present challenges in providing a large number of content units that meet one or more specified selection criteria from the storage system to another system (e.g., for processing). Some embodiments of the invention address these limitations. However, it should be appreciated that not every embodiment of the invention addresses all of the above-described limitations and some embodiments are not specifically directed to addressing any of these particular limitations.

A "content unit," as the term is used herein, may include any type of content, regardless of where, how, or by what entity the content is generated, and may include both original (or independent) data and metadata (i.e., data about other data). One particular type of content unit that may be processed or transferred in some embodiments is referred to herein as a qualified content unit. A qualified content unit, as used herein, is defined as a content unit that includes at least one type of content or data other than file system attributes that are created by a file system installed on the storage system that stores the content unit. A file system attribute is metadata created by a file system that is associated with one or more files stored in the file system. Information in a file system attribute may include, for example, the last time the file was accessed, the last time the file was modified, access permissions for the file, and/or any other suitable information about the file.

It should be appreciated that, in some embodiments, content units may be stored as files in a file system on a storage system and may store information similar to the information stored in file system attributes by the file system on the storage system. For example, a first content unit may store metadata about content stored in a second content unit. This metadata may include, for example, the time at which the second content unit was created, the size of the second content unit, and/or any other suitable information. When the metadata stored in the first content unit are created by an entity other than the file system on the storage system, the first content unit is not considered a qualified content unit, even though the first content unit is stored as a file in a file system, because this metadata was not created by the file system on the storage system where the first content unit is stored.

Other than not being limited to file system attributes stored by a file system on the storage system on which the content unit is stored, qualified content units are not limited in any respect. In one embodiment, at least some qualified content units are transferred that only store user content. User content is content that is generated by an application program executing on a computer other than the storage system and may include data and/or metadata. An application program, as used herein, is a computer program that facilitates a user-oriented task, such as word processing, storage and/or viewing of records (e.g., financial or medical records), managing inventory, sending and receiving e-mail, and/or any other user-oriented task. It should be appreciated that, when user content is originated by an application program outside the storage system but is encrypted, compressed, or otherwise re-formatted (in the storage system or elsewhere) prior to storage, the stored content is still considered user content.

In another embodiment, qualified content units may be transferred that store only original data (i.e., that do not store any metadata). As discussed in greater detail below, one example of a content unit that stores only original data is a blob, and one example of a content unit that stores metadata (and may also store original data) is a content descriptor file (CDF).

In another embodiment, qualified content units may be transferred that store only data that was generated by an entity (e.g., a host computer and/or application program) outside of the storage system. Such qualified content units do not have bits generated internal to the storage system (e.g., file system attributes generated by a file system executing on the storage system). It should be appreciated that, when such content units are generated by an entity outside the storage system, but then are encrypted, compressed, or otherwise re-formatted inside the storage system prior to storage, the stored content is still considered to have been generated outside the storage system.

In another embodiment, qualified content units may be transferred that do not store any mutable metadata. It should be appreciated that the metadata stored in some qualified content units may be immutable (i.e., incapable of being changed). By contrast, some content units may include metadata (e.g., file system attributes written by a file system on the storage system that stores the content units), such as time of last access or modification, and access permissions, that are capable of being changed.

In another embodiment, qualified content units may be transferred that are object addressable. An object addressable content unit is a content unit that is associated with, and may be accessed via, an object identifier that, from the perspective of entity accessing the content unit, does not control where the content unit is stored.

It should be appreciated that qualified content units are a subset of content units (i.e., every qualified content unit is a content unit). In different embodiments of the invention, the aspects discussed may be used to transfer only qualified content units, only content units that are not qualified content units, or some combination thereof.

In one embodiment, a storage system is provided that is capable of receiving a request for content units that satisfy at least one selection criterion. The storage system may locate any content units that meet the selection criterion or criteria, and may return these content units in response to the request. In another embodiment, a host computer may issue a request to a storage system to provide content units (as opposed to merely an object identifier) stored on the storage system that meet the selection criterion or criteria specified in the request.

In another embodiment, the storage system may be an OAS system that provides an OAS interface through which a content unit may be accessed using an object identifier that identifies the content unit. The OAS system may also have the capability to receive a request that does not provide any object identifiers for specific content units, but specifies at least on selection criterion. In response to receiving the request, the storage system identifies content units stored thereon that meet the selection criterion or criteria specified in the request and returns these content units. In a related embodiment, a host computer is provided that issues such a request.

In yet another embodiment, a capability may be provided to dynamically add processors to or remove processors from an ongoing request for a storage system to provide content units meeting at least one selection criterion.

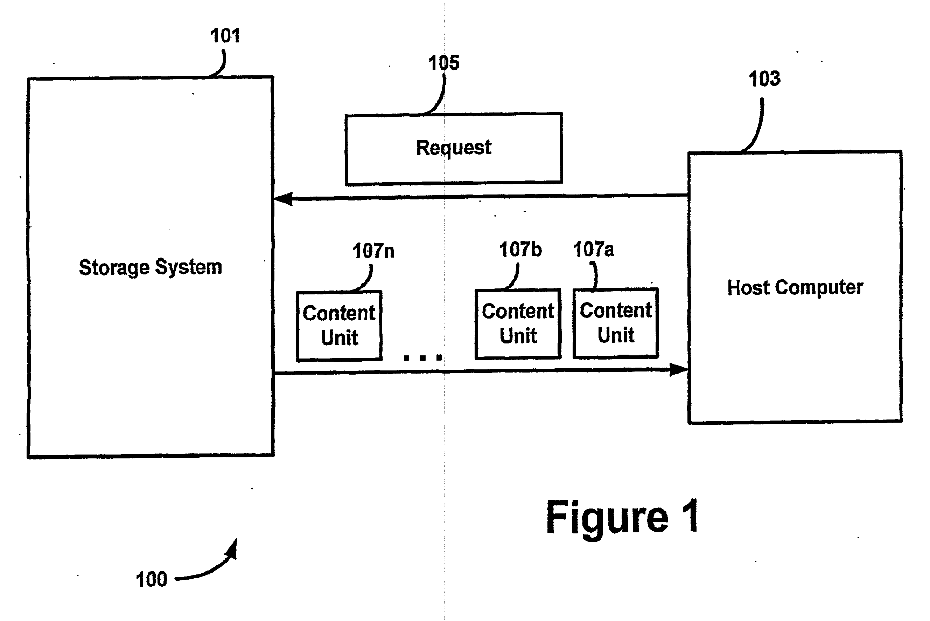

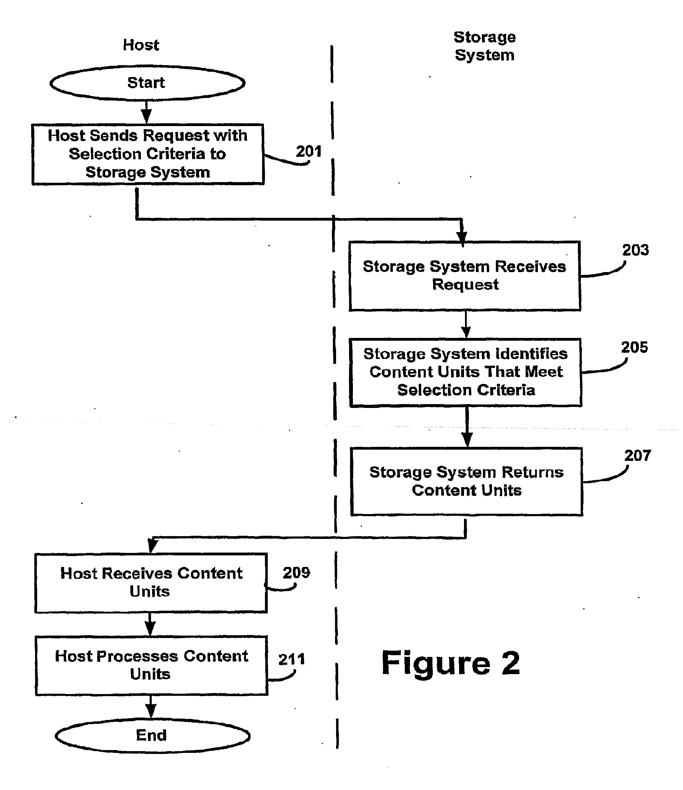

Figure 1 is a block diagram of a computer system 100 on which embodiments of the invention may be implemented. Computer system 100 includes a storage system 101 and a host computer 103. Figure 2 is a flow chart depicting an illustrative process for providing content units stored on storage system 101 to host computer 103, in accordance with one embodiment.

As shown in Figure 2, the process begins at act 201, where host computer 103 sends a request 105 to storage system 101, requesting that the storage system provide content units stored thereon that meet one or more selection criteria. The process then continues to act 203, where storage system 101 receives the request. The process next continues to act 205, where the storage system identifies and locates content units that meet the selection criteria specified in the request. The process then advances to act 207, where the storage system provides content units (e.g., content units 107a, 107b,..., 107n in Figure 1) that meet the selection criterion or criteria specified in request 105 to host computer 103. The process next continues to act 209, where the host computer receives the content units from the storage system, and act 211 where the host computer processes the received content units. The host computer may process the content units in an desired manner, as the invention is not limited in this respect.

Request 105 may specify any suitable selection criterion or criteria, as the invention is not limited in this respect. For example, the selection criterion or criteria may include a time range during which content units were stored on storage system 101, keywords (e.g., included in a content unit's metadata), size limits or a size range of content units, type of content (e.g., data, metadata, or both), and/or any other suitable criteria. It should be appreciated that the request may specify more than one search criteria and, when multiple search criteria are specified, these search criteria may be combined by Boolean logic in any suitable way, as the invention is not limited in this respect.

In the example of Figure 1, storage system 101 provides content units to host computer 103 in response to receiving a request 105 from host computer 103. However, the invention is not limited in this respect. As is discussed in greater detail below, storage system 101 may provide content units to other destinations or types of systems instead of, or in addition to, host computer 103.

Host computer 103 may be any type of system, as the invention is not limited in this respect. For example, host computer 103 may be a server, such as an application server, a personal computer, an appliance, or any other suitable type of system.

In some embodiments, a second storage system may issue a request 105 that specifies one or more selection criteria to storage system 101 (e.g., in place of, or in addition to, host computer 103) and receive content units that meet the selection criterion or criteria from storage system 101 in response to the request.

In one embodiment, storage system 101 may be an object addressable storage (OAS) system. That is, each content unit stored on storage system 101 may be associated with an object identifier that uniquely (or very nearly uniquely) identifies the content unit. Thus, for example, to request a specific content unit from storage system 101, host computer 103 may send a request to the storage system 101 that includes the object identifier for the content unit. From the perspective of the request entity (e.g., host computer 103), the object identifier is unrelated to the physical or logical location of the content unit on storage system 103. Thus, if storage system 101 were to move a content unit to a different physical or logical location, host computer 103 would still be able to access the content unit using the same object identifier.

One example of a type of object identifier that may be used in some embodiments is a content address. A content address is an identifier that is computed, at least in part, from at least a portion of the content of a content unit. That is, for example, all or as a portion of the content of a content unit may be hashed (e.g., using MD5 or any other suitable hashing algorithm) and the hash value may be used as the content address or a portion of the content address. OAS systems that use content addresses as object identifiers are referred to herein as content addressable storage (CAS) systems. Thus, in one embodiment, the storage system 101 may be a CAS system.

In one embodiment of the invention in which storage system 101 is an OAS system, request 105 may not include any object identifiers that identify specific content units. Rather, request 105 may identify content units to be retrieved only by specifying one or more selection criteria. However, the invention is not limited in this respect, as request 105 may, in addition to providing one or more selection criteria, also include one or more object identifiers identifying specific content units and/or any other suitable information identifying one or more content units.

As mentioned above, an example of a selection criteria that may be specified in request 105 is that the storage system return content units that satisfy the selection criteria and/or metadata about such content units. This may be accomplished in any suitable way, as the invention is not limited in this respect. In some embodiments of the invention, the content stored in content units may include data (e.g., application data) and metadata about the data (e.g., when it was stored, the identity of the application that stored it, etc.). In some embodiments of the invention, data and its corresponding metadata may be stored in the same content unit. However, the invention is not limited in this respect, as in other embodiments, data and its corresponding metadata may be stored in separate content units.

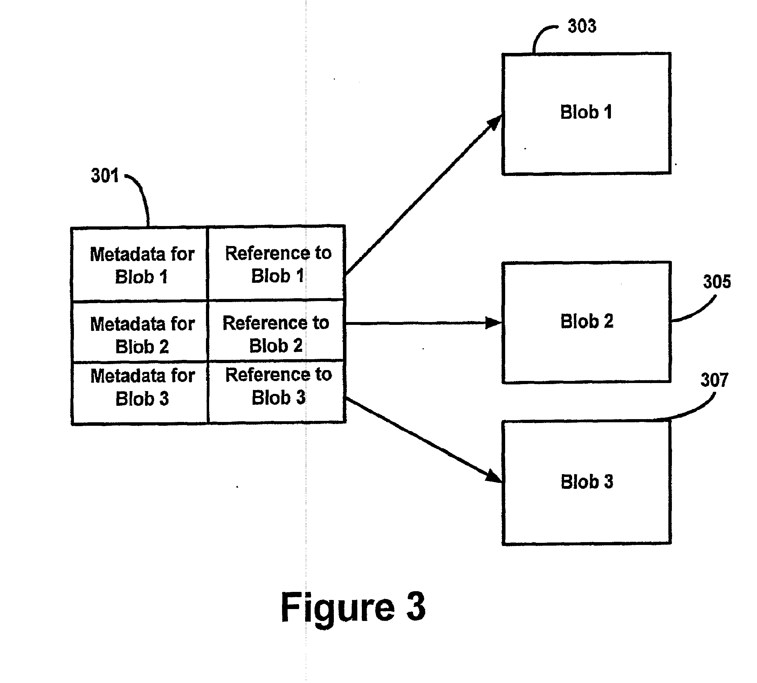

The storing of data and metadata in separate content units may be accomplished in any suitable way, as the invention is not limited in this respect. In one embodiment, content units that store metadata, referred to herein as content descriptor files (CDFs), include a reference to one or more separate content units that store the data to which the metadata pertains. Content units that store data are referred to herein as blobs. CDFs may reference and store metadata for any suitable number of blobs, as the invention is not limited in this respect. For example, as show in Figure 3, CDF 301 references and includes metadata for three blobs (i.e., blobs 303, 305, and 307). More detail on examples of systems with CDFs and blobs in an OAS system is provided in the applications listed in Table 1 (each of which is incorporated herein by reference).

CDF 301 may reference the blob in any suitable way, as embodiments of the invention are not limited in this respect. For example, CDF 301 may store the object identifier of each blob that it references as the reference to the blob. Thus, for example, if blob 303 stores video data from airport security camera one and blobs 305 and 307 each store video data from airport security camera two, the metadata for blob 303 in CDF 301 may indicate that the content of blob 303 is video data from airport security camera 1, while the metadata for blobs 305 and 307 indicates that the content of these blobs is video data from security camera two. Thus, a metadata search for airport security camera 1 may result in identifying CDF 301. The metadata of CDF 301 may be examined to determine that blob 303 stores video data from airport security camera one. The object identifier of blob 303 may be obtained from CDF 301 and blob 303 may then be accessed using this object identifier so that the blob can be processed in any desired way (e.g., using facial recognition software).

When metadata is stored in CDFs and its corresponding data is stored in blobs, host computer 103 may request that storage system 101 only provide CDFs and not blobs as one of the selection criteria, if it is only desired to receive metadata and not data. Similarly, host computer 103 may request that storage system 101 only provide blobs and not CDFs as one of the selection criteria if it is only desired to receive data, but not metadata, or can request that both metadata and data be provided.

In one embodiment, storage system 101 is configured to, by default, only provide blobs in response to request 105. Thus, it is not necessary to specify "only blobs" as one of the selection criteria. For example, storage system 101 may receive a request that includes selection criteria. The storage system may identify the CDFs that meet the selection criteriat, but instead of returning these CDFs, may locate and return the blobs that are referenced by CDFs that meet the selection criteria.

Storage system 101, in response to request 105, may provide content units to host 103 in any suitable way and in any suitable format, as the invention is not limited in this respect. In one embodiment, the storage system provides the content units to the host in a way that facilitates processing by the host, and that may be specified by the host. In one embodiment, storage system 101 may store content units in a file system on host computer 103. When a file system on host computer 103 is used to store content units provided in response to request 105, the file system may be organized in any suitable way. For example, the file system may use a time-based directory structure, a directory structure organized based on object identifiers, a directory structure organized based on metadata keywords, or any other suitable directory structure.

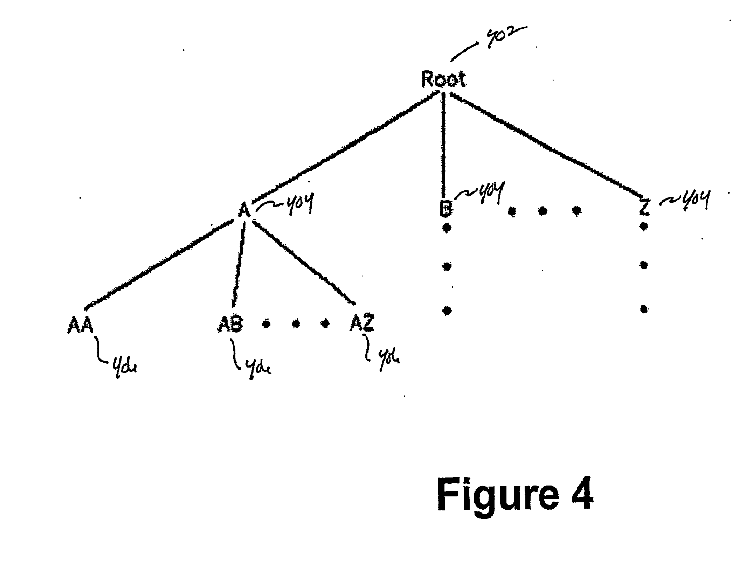

Figure 4 is an illustrative file system that has a directory structure organized based on object identifiers. The directory structure of Figure 4 includes a number of hierarchical directories. The directory at the top of the hierarchy is termed the root directory 402. At the second level in the hierarchy are a number of subdirectories 404. Each of these subdirectories represents the first character in the object identifier of a content unit. That is, a content unit having an object identifier beginning with the character 'A' is stored in one of the subdirectories of directory 'A.' The subdirectory 406 in which the content unit is stored is dependent on the second character of the object identifier. When host computer 103 accesses a content unit that has been retrieved from storage system 101 and stored in the file system, the host computer may locate particular content units based on their object identifiers. For example, an application program on the host computer may locate a particular content unit by traversing the file system hierarchy to locate the subdirectory whose name matches the first two characters of the object identifier of the content unit. In the directory structure of Figure 4, the leaf directories 406 represent the first two characters of the object identifier of a content unit. However, the invention is not limited in this respect, as embodiments of the invention may use a hierarchical directory structure that has additional levels in the hierarchy. Any suitable number of additional levels may be used, as the invention is not limited in this respect. For example, the subdirectory 'AA' may have subdirectories AAA-AAZ (i.e., 26 subdirectories) which are the leaf subdirectories of the directory structure. Thus, the subdirectory in which the content unit is stored is dependent on the first three characters of its object identifier.

In another embodiment, the file system directory structure on host computer 103 may be organized based on time, and the location of a content unit in the directory structure may be selected based on the time at which the content unit was originally stored on storage system 101. For example, a content unit that was stored on July 31, 2004 at 11:00 AM may be stored in a directory /2004/07/31/11/00/00, in a directory structure having six levels (L1-L6 in hierarchical order), wherein directory L1 stores a value of 2004 designating the year in which the content unit was stored, the subdirectory L2 stores a value 07 designating the month, the subdirectory L3 stores a value 31 designating the day, the subdirectory L4 stores a value 11 designating the hour, the subdirectory L5 stores a value 00 designating the minute, and the L6 stores a value 00 subdirectory designating the second. Thus, for example, if a second content unit was stored on the storage system at July 31, 2004 at 11:30 AM, the second content unit may be stored in the directory /2004/07/31/11/30/00 in the file system on the host computer.

The time-based directory structure assists in allowing an application program on the host computer to locate content units based on the time that they were originally stored on storage system 101. It should be appreciated that the embodiment of the present invention that employs time in specifying a directory structure for storing content units is not limited to the particular example described above, as this embodiment of the present invention can be implemented in any of numerous ways, including through the use of different units of time as establishing boundaries for the subdirectory levels and the number of subdirectory levels.

As discussed above, many other suitable directory structures (e.g., a directory structure organized based on metadata keywords or other selection criteria) may be used, as the invention is not limited in this respect.

The directory structure may be created and content units may be placed into the appropriate directories in any suitable way, as the invention is not limited in this respect. In one embodiment, the file system on host computer 103 may be a networked file system. Storage system 101 may create the directory structure and place content units into the appropriate directories in the directory structure.

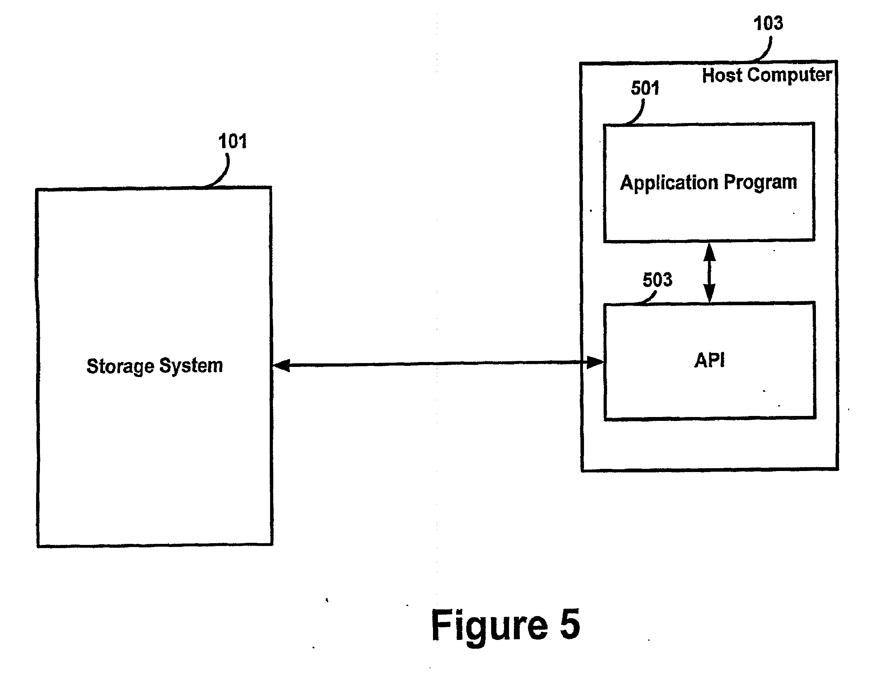

In another embodiment, the file system on host computer 103 need not be a networked file system that is accessible to storage system 101 (although it can be). Software on host computer 103, such an application programming interface (API), may serve as an interface between the storage system 101 and application programs that wish to access content on storage system 101. The API may be responsible for creating and managing the directory structure. For example, as shown in Figure 5, host computer 103 may execute an application program 501 and an API 503. Application program 501 may be any type of application program that reads content units from and/or writes content units to storage system 101. API 503 may provide a set of subroutines that may be called by application program 501 to communication with storage system 101.

Thus, for example, application program 501 may call a subroutine of API 503 that causes API 503 to send a request to storage system 101 for content units that meet specified selection criteria. The application program may specify the selection criteria in the subroutine call or in any other suitable way..The application program may also specify the manner in which the results are to be returned (e.g., in a time-based directory structure or other type of directory structure) in the subroutine call or in any other suitable way. Storage system 101 may receive the request, identify the requested content units, and return these content units to API 503. API 503 may receive the returned content units, and place each content unit in the appropriate directory in the file system directory structure. If the appropriate directory does not yet exist, then API 503 may add the appropriate directory or directories to the file system directory structure.

In the example above, API 503 served as the interface through which application program 501 communicated with storage system 101 and as the entity which organized content units received from storage system 101 into a particular directory structure. However, the invention is not limited in this respect as, in some embodiments, these two operations may be performed by separate entities (e.g., separate software programs).

In the examples above, content units are stored in file systems (although the invention is not limited in this respect). In some embodiments, each content unit may be stored as a separate file in the file system. However, the invention is not limited in this respect, as multiple content units may be "containerized" (i.e., stored) in a single file. The containerization of content units is discussed in greater detail in some of the commonly-assigned applications listed in Table 1 below.

The examples above refer to file systems as having directory structures that include directories. As used herein, a directory refers to a logical entity in a file system that logically stores files and/or other directories. Some file systems use the term "folder" instead of the term "directory." It should be appreciated that, as it is used herein, the term "directory" encompasses a "folder" or any other logical entity in a file system that logically stores files and/or other logical storage entities.

Further, the illustrative file system directory structures in the examples above employed a hierarchical directory structure, whereby directories are arranged in a hierarchy. It should be appreciated that in embodiments of the invention wherein content units are stored in a file system on the host computer, the directory structure of the file system need not be hierarchical, as a flat directory structure or any other suitable directory structure may be used. In addition, the file system need not be organized based on some characteristic of the content units to be stored in the file system, as the invention is not limited in this respect. The file system may be organized in any suitable way and need not be organized at all.

As discussed above, when storage system 101 receives a request to provide content units stored thereon that meet a selection criterion or criteria specified in the request, storage system 101 may identify and locate content units stored thereon that meet the request. This may be done in any suitable way, as the invention is not limited in this respect. For example, in one embodiment, storage system 101 may identify each content unit that meets the selection criterion or criteria and create a list of object identifiers that correspond to these content units. After the list is completed, the storage system may then traverse the list, accessing the content unit that corresponds to each object identifier in the list and providing it to the host computer.

In another embodiment, the storage system 101 may begin identifying content units that meet the selection criterion or criteria and, as each content unit is identified, the content unit may be accessed and provided to the host computer.

It should be appreciated that identifying a content unit and accessing the content unit may be two discrete procedures (though each procedure may be performed by the same computer process or thread, as the embodiments of invention described herein are not limited in this respect). For example, a request received by storage system 101 may ask for content units whose metadata includes a certain keyword.

The storage system may identify the content units in any suitable way, as the invention is not limited in this respect. In one embodiment, the storage system may have a metadata index that maps a metadata keyword to one or more object identifiers that correspond to content units whose metadata includes the keyword. Identifying the content unit may entail searching the metadata index to determine object identifiers that correspond to content units whose content includes the specified keyword.

Accessing a content unit may entail translating an obj ect identifier to physical storage location (e.g., a disk location) at which the content of content unit is stored and retrieving the content from that storage location.

In some situations, identifying the content unit may involve accessing the content unit. For example, in some embodiments, storage system 101 may not have a pre-existing metadata index that maps metadata keywords to object identifiers. Thus, to determine which content units have metadata that includes a certain keyword, storage system 101 may access the content units and search the metadata for the keyword.

In embodiments that employ a pre-existing metadata index that maps metadata keywords to object identifiers whose content units include those keywords in metadata, it should be appreciated that such an index need not be stored on storage system 101, and that storage system 101 need not perform the indexing of these metadata keywords, as the invention is not limited in this respect. For example, in some embodiments, the indexing of metadata keywords may be performed separately from the storage system (e.g., by an appliance or other computer disposed outside the storage system). The separate indexer may not store content units, but may receive content units stored on storage system 101 (synchronously or asynchronously) and process them to create a metadata index.

As discussed above, content units that meet the selection criterion or criteria specified in a request issued by host computer 103 may be returned from storage system 101 to systems other than, or in addition to, host computer 103. For example, an application program executing on host computer 103 may issue a request for content units that include video data from an airport security camera stored on storage system 101 between January 12, 2005 and January 18, 2005. The application program may be configured to perform facial recognition (and/or other processing) techniques on the video data. Other host computers may be available to execute separate instances of the same application program. Thus, it may be desired to send some of the content units that meet the selection criteria to each of the host computers, so that each instance of the application program may process a portion of the content units in parallel. Thus, results may be obtained faster than if a single instance of the application program were to process all of the content units.

In the example above, a facial recognition application program is used to process content units that store video data from an airport security system. However, the invention is not limited in this respect, as any suitable type of application program may be used and content units that store any suitable type of content may be provided from the storage system and processed.

The transfer of content units that meet a specified selection criterion or criteria from storage system 101 to one or more host computers instead of, or in addition to, the host computer that issued the request for the content units may be performed in any suitable way, as the invention is not limited in this respect. Further, as discussed in detail below, the transfer of content units to host computers other than the host computer that issued the request (i.e., host computer 103) may begin after storage system 101 has already begun providing content units that meet the selection criterion or criteria to host computer 103. The indication that content units meeting the selection criterion or criteria are to be provided to other host computers, instead of, or in addition to, host computer 103 need not be provided to the storage system prior to or contemporaneously with the request. Rather, such an instruction may be provided to the storage system any time after the storage system has received the request. Additionally, a host computer that has begun receiving content units from storage system 101 in response to the request may send an indication to storage system 101 to stop sending content units to it. Thus, the number of computer to which content units can be sent may be altered dynamically to increase or decrease the number of processors or to substitute processors.

In some embodiments, the initial request to storage system 101 may specify one or more host computers (in addition to, or instead of, the host computer that issued the request) to which results are to be provided.

As used herein, the term "iteration" refers to a search on storage system 101 for content units that meet a criterion or criteria specified in an access request. Thus, when storage system 101 receives a request to provide content units that meet a specified criterion or criteria to one or more destinations, an iteration that represents a search for those content units is created on storage system 101 (i.e., storage system 101 begins searching for those content units). When the storage system 101 subsequently receives a request to begin providing content units identified in the search to an additional destination (e.g., host computer), the additional destination is referred to herein as "joining the iteration." When storage system 101 receives a request to stop providing content units to a destination that is receiving content units as part of an iteration, the destination is referred to herein as "exiting the iteration."

Thus, resources need not be allocated to process content units provided from the storage system prior to sending a request to the storage system to provide those content units. Rather, the storage system may provide content units that are identified in an iteration to resources as they become available for processing those content units and may stop providing content units to resources that become unavailable (e.g., those that are needed for other processing tasks).

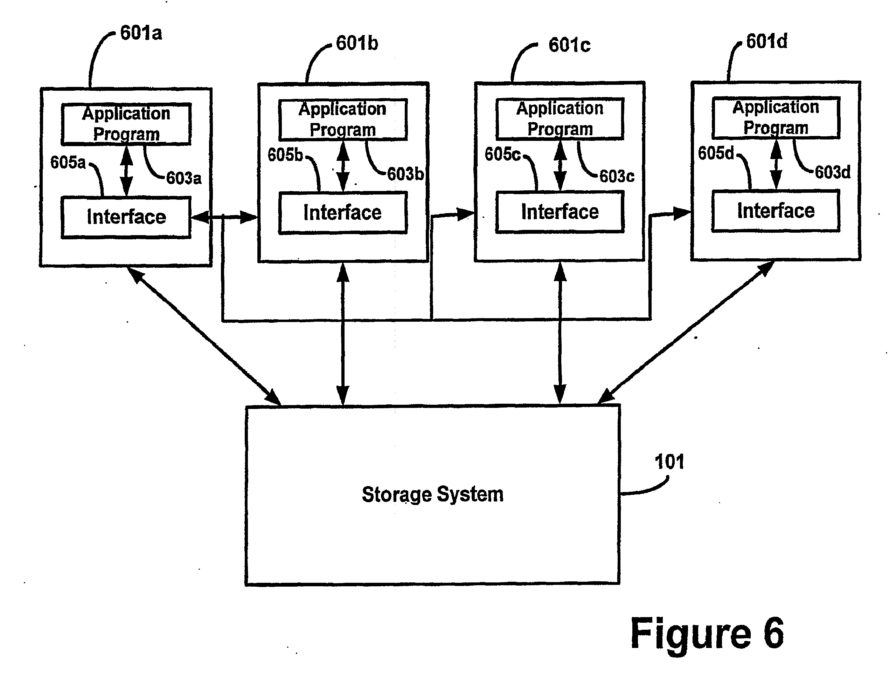

Figure 6 shows a computer system that includes a storage system 101 and a plurality of host computers 601a, 601b, 601c, and 601d. Each host computer may execute an application program 603a-d (e.g., a program that processes content from content units) and comprise an interface 605a-d, through which application programs (e.g., application program 601) communicate with storage system 101 to create and/or join iterations. Interfaces 605 may be a separate interface from the interface through which application programs communicate with storage system 101 for other types of access requests (e.g., read, write, and query requests) or may form a part of that interface, as the invention is not limited in this respect. For example, interfaces 605 may be separate interfaces from interface 503 in Figure 5 or may form a part of interface 503.

In embodiments in which interfaces 605 are separate from API 503, each interface 605 may perform some of the operations described in examples above as being performed by API 503. Interfaces 605 may perform these operations in addition to, or instead of, API 503. For example, in embodiments where content units received from the storage system are stored in a file system on the host computer, interfaces 605 may store content units in the appropriate directory in the file system and/or create and manage the directory structure of the file system.

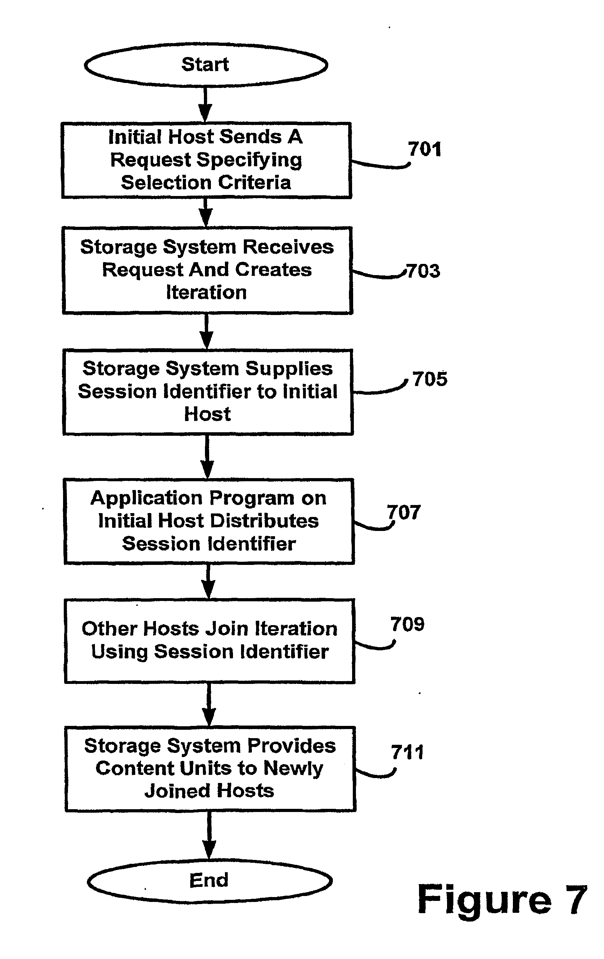

Figure 7 depicts an illustrative process by which an iteration may be created on storage system 101 and additional host computers may join the iteration. The process begins at act 701 when a host computer (e.g., host computer 601a) initially sends a request to storage system 101 for content units that meet a specified selection criterion or criteria. The process then continues to act 703 where the storage system receives the request and creates an iteration corresponding to the request (i.e., begins searching for content units).

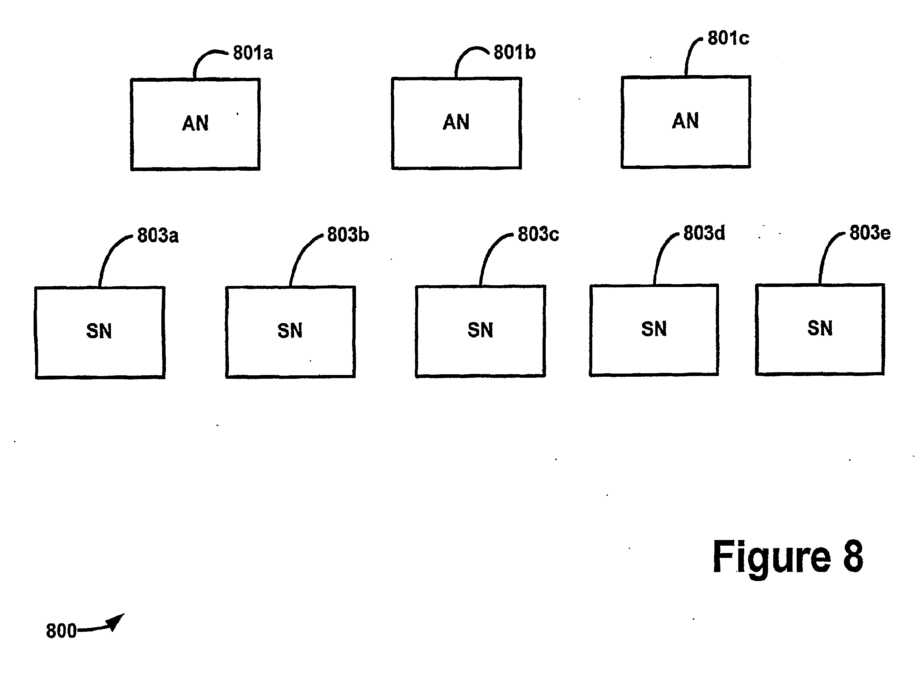

In some embodiments, storage system 101 may be a distributed storage system. An example of a distributed storage system 800 is shown in Figure 8. Distributed storage environment 800 includes a plurality access nodes 801a-801c and a plurality of storage nodes 803a-803e. Access nodes 801 may receive and respond to access requests from host computers, and storage nodes 803 may store content sent to storage environment 800 by host computers. Access nodes 801 and storage nodes 803 may be coupled by a network (not shown) and communicate over the network such that each node may make its presence on the network known to the other nodes. In this manner, the nodes may operate together to process access requests and store data for host computers.

Each node may include processing resources (e.g., processor and memory) and storage devices. The nodes communicate with each other to store content, respond to access requests, and perform other environment functions. To a user of the storage environment (e.g., a host computer or an application program executing thereon), the storage environment may appear as single entity. That is, the user need not be aware that the storage environment includes a plurality of separate nodes or on which storage node a certain unit of data is stored or mirrored.

In embodiments in which storage system 101 is a distributed storage system, an iteration may be created on each storage node in the storage system on which content units that meet the selection criterion or criteria could be potentially stored. That is, an access node in the distributed storage system may receive the request for content units that meet the selection criteria and direct each storage node that potentially stores any of those content units to begin to search for content units stored thereon that meet the selection criteria. As a storage node identifies content units that meet the selection criteria, it may return these content units to the directing access node to be provided back to the one or more host computers in the iteration, or may provide the content units directly to one of the host computers that is joined in the iteration.

In a distributed storage system, content units may be mirrored on two or more storage nodes. That is, two or more copies of the same content unit may be stored on different storage nodes in the distributed storage system. This may be done, for example, so that the content unit is available in case one of the copies of the content unit is corrupted or the storage node on which the content unit is stored becomes unavailable (e.g., due to hardware failure). In embodiments where an iteration is created on each storage node in response to a request, two or more storage nodes may identify the same content unit, as each of these storage nodes may identify the mirrored copy of the content unit stored thereon.

Thus, in some embodiments, mirrored copies of the same content unit may be filtered so that only one copy of the content unit is provided to the application program or programs joined in the iteration. The mirrored copies may be filtered in any suitable way, as the invention is not limited in this respect. For example, in one embodiment, metadata associated with or included in the content unit may indicate whether the content unit is a primary copy or a mirrored copy. The storage node may read the metadata and only return primary copies of content units. In another embodiment, wherein storage nodes provide content units that meet the selection criteria to the directing access node (i.e., the access node that received the request) and the access node returns the content units to the host computers joined in the iteration, the access node may track which content units have been sent (e.g., using their object identifiers) and filter out any duplicates.

In some embodiments duplicate content units (e.g., mirror copies) may not be filtered out, as the invention is not limited to filtering out duplicates. Thus, for example, two copies of the same content unit may be provided to one or more of the application programs in the iteration and each copy may be processed by one of the application programs.

After the iteration has been created; the process continues to act 705 where the storage system creates a session identifier that identifies the iteration and returns the session identifier to the host computer that issued the request (host computer 601 a, in this example). Storage system 101 may return the session identifier to application program 603a via interface 605a, or in any other suitable manner The use of a session identifier allows the storage system to process multiple iterations at the same time. Indeed, different application programs on the same host computer may contemporaneously participate in different iterations, or the same application may participate in two different iterations at the same time.

The process next continues to act 707, where the application program may distribute the session identifier to other application programs executing on other host computers.

The process next continues to act 709, where other application programs executing on other host computers use the session identifier to join the iteration. This may be done in any suitable way, as the invention is not limited in this respect. For example, application program 603b executing on host computer 601b, after receiving the session identifier from application program 603a, may indicated to interface 605b that it wishes to join the iteration on storage system 101 that corresponds to the received session identifier. Application program 603b may register a callback with interface 605b. That is, application program 603b may provide the name of a subroutine that interface 605b is to call when it receives content units generated from the iteration from storage system 101. The subroutine may be a subroutine that provides received content units to the application program or may be a subroutine that notifies the application program that content units have been received and stored on the host computer (e.g., in a file system).

In the example above, interface 605b "pushes" content units to application program 603b by calling the registered subroutine. However, the invention is not limited to using a callback subroutine, as the application program may receive content units from the interface in any suitable way. For example, the application program may "pull" content units from the interface by calling a subroutine of the interface.

When interface 605b receives an indication from the application program requesting to join the iteration identified by the session identifier, the interface may send an instruction to storage system 101 that host computer 601b wishes to join that iteration. Storage system 101 may, for each iteration, maintain information (e.g., in a record) of host computers that are joined in the iteration. When storage system 101 receives an instruction (e.g., from an interface) that a host computer wishes to join the iteration corresponding to a specified session identifier, the storage system may add that host computer to the information identifying host computers joined in the iteration.

In accordance with one embodiment, an instruction to add a host computer to an iteration may be sent to storage system 101 any time after the initial request for content units has been received by the storage system and before the iteration has completed, as the invention is not limited in this respect. Thus, host computers may join an iteration even after some (or even most) of the content units that meet the specified search criterion or criteria have been identified and provided to one or more host computers that were previously joined in the iteration.

The process next continues to act 711, where the storage system provides content units to host computers that have joined in the iteration. As discussed above, storage system 101 may maintain a record of all host computers that are joined in the iteration. When a content unit has been identified as meeting the specified selection criteria and the storage system has accessed the content unit and is ready to return the content unit to one of the host computers joined in the iteration, the storage system may select one of these host computers to receive the content unit. This may be done in any suitable way, as the invention is not limited in this respect. For example, in one embodiment, the storage system may arbitrarily or pseudorandomly select one of the host computers to receive the content unit. In another embodiment, a load balancing scheme may be used to select one of the host computers. Any suitable load balancing scheme may be used, as the invention is not limited in this respect. For example, a round-robin scheme, a scheme that uses information about available processing resources and/or capabilities on each host computer, or any other suitable load balancing scheme may be used.

It should be appreciated that the invention is not limited to providing content units to multiple hosts computers as, in some embodiments, content units identified in an iteration are provided to only a single host computer, such as, for example, the host computer that issued the request. Further, in some embodiments, the ability to provide content units identified in an iteration to multiple host computers may not be implemented or, even when implemented, the ability to dynamically add or remove host computers from an iteration may not be implemented, as the invention is not limited in this respect. Additionally, in some embodiments the ability to dynamically add host computers to an iteration may be implemented, but not the ability to dynamically remove host computers, or the ability to dynamically remove host computers from an iteration may be implemented, but not the ability to dynamically add hosts, as the invention is not limited in this respect.

In accordance with one embodiment, a host computer joined in an iteration may exit the iteration at any time before the iteration is complete and the storage system may cease providing content units to the host computer. This may be done in any suitable way, as the invention is not limited in this respect. For example, an application program 603 b joined in an iteration on storage system 101 may send an indication to interface 605b specifying the session identifier and requesting to exit the corresponding iteration. Interface 605b may send a request to storage system 101 indicating that the host computer wishes to exit the iteration identified by the session identifier. In response, storage system 101 may remove the host computer from the record identifying host computers joined in the iteration. Thus, storage system 101 will no longer continue to provide content units from that iteration to the host computer.

As used herein, each node, processor, or processor core of a parallel computer that is allocated separate storage space for storing different content units received from the storage system, and/or that separately processes different content units, may be considered a separate host computer, system, or server, whereas nodes, processors, or processor cores that together process the same content units (i.e., multiple nodes, processors, or processor cores that collaborate to process a single content unit), may be collectively considered to be a single host computer, system, or server.

In one embodiment, storage system 101 may service an iteration and simultaneously receive other access requests unrelated to the iteration. For example, while servicing an iteration, storage system 101 may receive read and/or write requests (e.g., unrelated to the iteration) from a host computer not participating in the iteration or a host computer that is participating in the iteration. Thus, in one embodiment, the storage system may determine the priority of such access requests relative to the iteration, and, if it is determined that such an access request has a high priority, slow down the iteration to free up resources for processing these access requests.

The storage system may determine the priority of an access request in any suitable way, as the invention is not limited in this respect. For example, in one embodiment, the storage system may determine priority based on the host computer or application program that issued the access request. In another embodiment, the access request may include a priority rating that the storage system may used to determine whether to, and to what extent to, free up processing resources to service the request.

The storage system may free up processing resources being used to service an iteration in any suitable way. For example, the storage system may include one or more multitasking processors, wherein one or more processes executing on one or more of the processors is a process servicing the iteration and one or more other processes is a process servicing the access requests. The storage system may designate that the processor or processors spend a certain amount or percentage of its time executing the process that services the iteration. When a high priority access request is received, the storage system may reduce the amount of time that the processor or processors spend on the process or processes servicing the iteration.

In one embodiment, storage system 101 may be a federation of storage systems. That is, storage system 101 may include two or more separate storage systems, each of which includes separate processing resources, but which appears as a single storage system to an entity accessing content on any of the storage systems. Examples of federations of storage systems are described in detail below in some of the applications listed in Table 1.

When a host computer sends a request for content units that satisfy a specified selection criterion or criteria to the federation, in one embodiment, this request may be received by only one of the storage systems in the federation. However, it is expected that any content units stored in the federation that satisfy the selection criterion or criteria be returned, regardless of whether these content units are stored on the storage system that received the request or on other storage systems in the federation.

In one embodiment of the invention wherein storage system 101 is a federation of storage systems, when one of the storage systems in a federation receives a request for content units that satisfy a specified selection criterion or criteria, the storage system may create an iteration on that storage system and generate a session identifier for the iteration. In addition, the storage system may instruct the other storage systems in the federation that potentially store content units that satisfy the request to also create iterations and assign those iterations the same session identifier. The storage system may also specify the host computer that issued the request so that the other storage systems in the federation may return content units that satisfy the selection criterion or criteria to that host computer. If any one of the storage systems in the federation subsequently receives an instruction to add a host computer to the iteration, the storage system that received the instruction may forward the instruction to the other host computers in the federation and each storage system may add the host computer to its iteration.

The above-described embodiments of the present invention can be implemented on any suitable computer or storage system. Examples of suitable computers and/or storage systems are described in the patent applications listed below in Table 1 (collectively "the OAS applications"), each of which is incorporated herein by reference. It should be appreciated that the computers and storage systems described in these applications are only examples of computers and storage systems on which the embodiments of the present invention may be implemented, as the invention is not limited to implementation on any of these object addressable storage systems, or to object addressable storage systems at all.

**Table 1**

| Title | Serial No. | Filing Date |
|---|---|---|
| Content Addressable Information, Encapsulation, Representation, And Transfer | 09/236,366 | January 21, 1999 |
| Access To Content Addressable Data Over A Network | 09/235,146 | January 21, 1999 |
| System And Method For Secure Storage Transfer And Retrieval Of Content Addressable Information | 09/391,360 | September 7, 1999 |
| Method And Apparatus For Data Retention In A Storage System | 10/731,790 | December 9, 2003 |
| Methods And Apparatus For Facilitating Access To Content In A Data Storage System | 10/731,613 | December 9, 2003 |
| Methods And Apparatus For Caching A Location Index In A Data Storage System | 10/731,796 | December 9, 2003 |
| Methods And Apparatus For Parsing A Content Address To Facilitate Selection Of A Physical Storage Location In A Data Storage System | 10/731,603 | December 9, 2003 |
| Methods And Apparatus For Generating A Content Address To Indicate Data Units Written To A Storage System Proximate In Time | 10/731,845 | December 9, 2003 |
| Methods And Apparatus For Modifying A Retention Period For Data In A Storage System | 10/762,044 | January 21, 2004 |
| Methods And Apparatus For Extending A Retention Period For Data In A Storage System | 10/761,826 | January 21, 2004 |
| Methods And Apparatus For Indirectly Identifying A Retention Period For Data In A Storage System | 10/762,036 | January 21, 2004 |
| Methods And Apparatus For Indirectly Identifying A Retention Period For Data In A Storage System | 10/762,043 | January 21, 2004 |
| Methods And Apparatus For Increasing Data Storage Capacity | 10/787,337 | February 26, 2004 |
| Methods And Apparatus For Storing Data In A Storage Environment | 10/787,670 | February 26, 2004 |
| Methods And Apparatus For Segregating A Content Addressable Computer System | 10/910,985 | August 4, 2004 |
| Methods And Apparatus For Accessing Content In A Virtual Pool On A Content Addressable Storage System | 10/911,330 | August 4, 2004 |
| Methods and Apparatus For Including Storage System Capability Information In An Access Request To A Content Addressable Storage System | 10/911,248 | August 4, 2004 |
| Methods And Apparatus For Tracking Content Storage In A Content Addressable Storage System | 10/911,247 | August 4, 2004 |
| Methods and Apparatus For Storing Information Identifying A Source Of A Content Unit Stored On A Content Addressable System | 10/911,360 | August 4, 2004 |
| Software System For Providing Storage System Functionality | 11/021,892 | December 23, 2004 |
| Software System For Providing Content Addressable Storage System Functionality | 11/022,022 | December 23, 2004 |
| Methods And Apparatus For Providing Data Retention Capability Via A Network Attached Storage Device | 11/022,077 | December 23, 2004 |
| Methods And Apparatus For Managing Storage In A Computer System | 11/021,756 | December 23, 2004 |
| Methods And Apparatus For Processing Access Requests In A Computer System | 11/021,012 | December 23, 2004 |
| Methods And Apparatus For Accessing Information In A Hierarchical File System | 11/021,378 | December 23, 2004 |
| Methods And Apparatus For Storing A Reflection On A Storage System | 11/034,613 | January 12, 2005 |
| Method And Apparatus For Modifying A Retention Period | 11/034,737 | January 12, 2005 |
| Methods And Apparatus For Managing Deletion of Data | 11/034,732 | January 12, 2005 |
| Methods And Apparatus For Managing The Storage Of Content | 11/107,520 | April 15, 2005 |
| Methods And Apparatus For Retrieval Of Content Units In A Time-Based Directory Structure | 11/107,063 | April 15, 2005 |
| Methods And Apparatus For Managing The Replication Of Content | 11/107,194 | April 15, 2005 |
| Methods And Apparatus For Managing the Storage Of Content In A File System | 11/165,104 | June 23, 2005 |
| Methods And Apparatus For Accessing Content Stored In A File System | 11/165,103 | June 23, 2005 |
| Methods And Apparatus For Storing Content In A File System | 11/165,102 | June 23, 2005 |
| Methods And Apparatus For Managing the Storage of Content | 11/212,898 | August 26, 2005 |
| Methods And Apparatus For Scheduling An Action on a Computer | 11/213,565 | August 26, 2005 |
| Methods And Apparatus For Deleting Content From A Storage System | 11/213,233 | August 26, 2005 |
| Method and Apparatus For Managing The Storage Of Content | 11/324,615 | January 3, 2006 |
| Method and Apparatus For Providing An Interface To A Storage System | 11/324,639 | January 3, 2006 |
| Methods And Apparatus For Managing A File System On A Content Addressable Storage System | 11/324,533 | January 3, 2006 |
| Methods And Apparatus For Creating A File System | 11/324,637 | January 3, 2006 |
| Methods And Apparatus For Mounting A File System | 11/324,726 | January 3, 2006 |
| Methods And Apparatus For Allowing Access To Content | 11/324,642 | January 3, 2006 |
| Methods And Apparatus For Implementing A File System That Stores Files On A Content Addressable Storage System | 11/324,727 | January 3, 2006 |
| Methods And Apparatus For Reconfiguring A Storage System | 11/324,728 | January 3, 2006 |
| Methods And Apparatus For Increasing The Storage Capacity Of A Storage System | 11/324,646 | January 3, 2006 |
| Methods And Apparatus For Accessing Content On A Storage System | 11/324,644 | January 3, 2006 |

The above-described embodiments of the present invention can be implemented in any of numerous ways. For example, the embodiments may be implemented using hardware, software or a combination thereof. When implemented in software, the software code can be executed on any suitable processor or collection of processors, whether provided in a single computer or distributed among multiple computers. It should be appreciated that any component or collection of components that perform the functions described above can be generically considered as one or more controllers that control the above-discussed functions. The one or more controllers can be implemented in numerous ways, such as with dedicated hardware, or with general purpose hardware (e.g., one or more processors) that is programmed using microcode or software to perform the functions recited above.

In this respect, it should be appreciated that one implementation of the embodiments of the present invention comprises at least one computer-readable medium (e.g., a computer memory, a floppy disk, a compact disk, a tape, etc.) encoded with a computer program (i.e., a plurality of instructions), which, when executed on a processor, performs the above-discussed functions of the embodiments of the present invention.

The computer-readable medium can be transportable such that the program stored thereon can be loaded onto any computer environment resource to implement the aspects of the present invention discussed herein. In addition, it should be appreciated that the reference to a computer program which, when executed, performs the above-discussed functions, is not limited to an application program running on a host computer. Rather, the term computer program is used herein in a generic sense to reference any type of computer code (e.g., software or microcode) that can be employed to program a processor to implement the above-discussed aspects of the present invention.

It should be appreciated that in accordance with several embodiments of the present invention wherein processes are implemented in a computer readable medium, the computer implemented processes may, during the course of their execution, receive input manually (e.g., from a user).

The phraseology and terminology used herein is for the purpose of description and should not be regarded as limiting. The use of "including," "comprising," "having," "containing", "involving", and variations thereof, is meant to encompass the items listed thereafter and additional items.

Having described several embodiments of the invention in detail, various modifications and improvements will readily occur to those skilled in the art. Such modifications and improvements are intended to be within the spirit and scope of the invention. Accordingly, the foregoing description is by way of example only, and is not intended as limiting. The invention is limited only as defined by the following claims and the equivalents thereto.

## Claims

1. At least one storage system storing a plurality of content units, the at least one storage system comprising:
an input; and
at least one controller, coupled to the input, that:
while processing a request, received via the input, to provide from the at least one storage system to at least one first destination each of the plurality of content units that meet at least one selection criterion, wherein the plurality of content units that satisfy the at least one selection criterion comprise a first group of content units, receives, via the input, at least one instruction to begin providing those content units in the first group of content units not already provided to the at lease one first destination to at least one second destination, wherein the at least one first destination differs from the at least one second destination; and
in response to receipt of the at least one instruction, provides those content units in the first group of content units not already provided to the at least one first destination to the at least one second destination.

2. The at least one storage system of claim 1, wherein the at least one controller receives the instruction after some of the first group of content units had already been identified and provided to the at least one first destination.

3. The at least one storage system of claim 1, wherein the at least one second destination comprises the at least one first destination and at least one additional destination.

4. The at least one storage system of claim 1, wherein the at least one first destination comprises the at least one second destination and at least one additional destination.

5. The at least one storage system of claim 1, wherein each of the at least one first destination and the at least one second destination comprises at least one server.
